(19) Europäisches Patentamt
European Patent Office
Office européen des brevets

(11) Veröffentlichungsnummer: **0 049 752**
**B1**

(12) # EUROPÄISCHE PATENTSCHRIFT

(45) Veröffentlichungstag der Patentschrift: **18.07.84**

(51) Int. Cl.³: **C 01 B 25/36**, C 04 B 35/10

(21) Anmeldenummer: **81106421.1**

(22) Anmeldetag: **19.08.81**

(54) **Verfahren zur Herstellung von pulverförmigem Monoaluminium-orthophosphat.**

(30) Priorität: **10.10.80 DE 3038242**

(43) Veröffentlichungstag der Anmeldung:
**21.04.82 Patentblatt 82/16**

(45) Bekanntmachung des Hinweises auf die Patenterteilung:
**18.07.84 Patentblatt 84/29**

(84) Benannte Vertragsstaaten:
**AT BE CH DE FR GB IT LI NL SE**

(56) Entgegenhaltungen:
**DE - A - 2 403 707**
**DE - A - 2 622 798**
**DE - C - 2 230 175**
**US - A - 2 405 884**
**US - A - 2 538 867**
**US - A - 3 801 704**

(73) Patentinhaber: **Giulini Chemie GmbH, Giulinistrasse 2 Postfach 123, D-6700 Ludwigshafen/Rhein (DE)**

(72) Erfinder: **Förster, Hans-Joachim, Dr. Dipl.-Chem., Osterweg 1, D-6830 Schwetzingen (DE)**
Erfinder: **Egner, Manfred, Ing. (grad.), Berlinerstrasse 7, D-6831 Brühl (DE)**
Erfinder: **Remmel, Karl, Wilhelminenstrasse 23, D-6700 Ludwigshafen/Rh. (DE)**

(74) Vertreter: **Benatzky, Erika, Dr., Giulinistrasse 2, D-6700 Ludwigshafen/Rh. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

## Beschreibung

Gegenstand der vorliegenden Erfindung ist die Herstellung von Monoaluminiumphosphat in Pulverform sowie die Verwendung dieses Produktes als Trockenphosphatbinder für feuerfeste Materialien.

Es ist bekannt, daß Monoaluminiumphosphat $Al(H_2PO_4)_3$ in Form von wäßrigen Lösungen, vorzugsweise einer 50%igen Lösung, ein hervorragendes Bindemittel für feuerfeste Materialien darstellt. Ein Nachteil dieses an sich ausgezeichneten Bindemittels wird vor allem darin gesehen, daß es den keramischen, tonerdehaltigen Massen erst kurz vor seiner Verarbeitung beigemischt werden kann. Bei einer längeren Lagerung von feuchten, tonerdehaltigen Feuerfestmassen, die mit saurem Aluminiumphosphat-Bindemittel zugestellt worden sind, kommt es nämlich infolge chemischer Reaktion mit dem $Al_2O_3$-haltigen Komponenten der Feuerfestmasse und/oder Austrocknung häufig zu einer vorzeitigen Erhärtung, so daß die Feuerfestmassen trocken und damit unverarbeitbar werden.

Versuche, das $Al(H_2PO_4)_3$ in fester Form einzusetzen, haben in der Praxis keine Bedeutung erlangt, da das feste Monoaluminiumphosphat nur schwer herstellbar und außerdem stark hygroskopisch ist. Die im Handel befindlichen 50%igen wäßrigen Lösungen werden durch Auflösen der stöchiometrischen Menge $Al(OH)_3$ in Orthophosphorsäure erhalten. Sie werden zur Erhöhung der Stabilität mit geringen Mengen an freier Phosphorsäure versetzt.

Es hat daher auch nicht an Versuchen gefehlt, das feuchtigkeitsempfindliche, nur sehr umständlich und schwierig herstellbare Monoaluminiumphosphat durch solche Bindemittel auf Aluminiumphosphatbasis zu ersetzen, die nach einem wirtschaftlich interessanten Herstellungsverfahren gewonnen werden können.

So wird in DE-A-2 403 707 und DE-A-2 531 258 vorgeschlagen, $AlH_3(PO_4)_2 \cdot 3\,H_2O$ einzusetzen, welches rasch und in guten Ausbeuten herstellbar ist, z. B. aus wäßrigen Monoaluminiumphosphatlösungen durch Ausfällung mit einem organischen Lösungsmittel, das mit Wasser mischbar ist. Nach diesem Verfahren sollen Ausbeuten an $AlH_3(PO_4)_2 \cdot 3\,H_2O$ von über 90%, d. Th. erzielt werden.

Das feinkristalline, pulverförmige

$$AlH_3(PO_4)_2 \cdot 3\,H_2O$$

ist zwar gegen feuchte Atmosphäre beständig, als Bindemittel für feuerfeste Materialien jedoch ungeeignet.

Gemäß der US-A-2 538 867 wird amorphes Monoaluminiumphosphat durch Umsetzung von Aluminiumhydroxid und konzentrierter Phosphorsäure in Rührwerkbottichen bei etwa 60—90°C hergestellt. Beim Abkühlen scheidet sich das $Al(H_2PO_4)_3 \cdot 3\,H_2O$ als weißes, stark hygroskopisches Produkt ab. Versuche, durch Verdampfung des Wassers aus Monoaluminiumphosphatlösungen festes Phosphat zu gewinnen, führen ebenfalls zu sehr hygroskopischen Pulvern, die bei Lagerung zerfließen und sich nicht auf die für den Einsatz in keramischen Massen erforderliche Kornfeinheit mahlen lassen.

In der DE-A-2 622 798 wird nun ein Verfahren zur Herstellung eines zur Feinmahlung geeigneten, schwach hygroskopischen Monoaluminiumphosphates vorgeschlagen, bei dem man festes $Al(OH)_3$ und Phosphorsäure einer Konzentration von 74—85 Gew.-% getrennt voneinander, aber gleichzeitig in ein beheiztes Reaktionsgefäß einträgt und das unter ständigem Mischen und Rühren gebildete Gemisch solange bei Temperaturen zwischen 100 und 200°C knetet, bis ein trockenes Pulver entstanden ist. Als besonders geeigneter Temperaturbereich wird der von 150—170°C genannt. In der Praxis konnte sich dieses Verfahren jedoch bis heute nicht durchsetzen. In diesem Zusammenhang ist hervorzuheben, daß nach Beispiel 3 der Offenlegungsschrift Monoaluminiumorthophosphat, das durch Eindampfen einer entsprechenden stöchiometrischen Lösung von $Al(OH)_3$) in Phosphorsäure mit einer auf 180°C beheizten Tauchwalze hergestellt worden ist, derart hygroskopisch ist, daß es zusammenklebt und sich nicht mahlen läßt. Eine Sprühtrocknung der Monoaluminiumphosphatlösungen ist — wie sich gezeigt hat — ebenfalls nicht durchführbar, da infolge der Hygroskopizität des Festproduktes die Anlagenteile sehr schnell verkrustet werden.

Überraschenderweise wurde nun gefunden, daß ein pulverförmiges, wasserlösliches Monoaluminiumphosphat weit einfacher aus handelsüblichen wäßrigen Lösungen durch Wasserverdampfung gewonnen werden kann, vorausgesetzt, daß unter Einhaltung nachstehender Bedingungen gearbeitet wird.

Das neue Verfahren ist dadurch gekennzeichnet, daß eine Monoaluminiumorthophosphatlösung mit einem Gewichtsverhältnis $P_2O_5 : Al_2O_3$ von maximal 4 : 1 mit mindestens einer Auftragswalze auf eine Trockenwalze aufgetragen und bei einer Temperatur von maximal 150°C zunächst auf eine Restfeuchte von maximal 7 und minimal 2% getrocknet wird, und daß das gebildete pulverförmige Monoaluminiumorthophosphat anschließend bei einer Temperatur kleiner als 150°C auf einen Wassergehalt von kleiner als 2% nachgetrocknet wird. Die Vortrocknung auf den Walzen wird mit Vorteil bei einer Temperatur zwischen 125 und 140°C durchgeführt. Trocknet man bei Temperaturen oberhalb 150°C, erhält man ein Produkt, das in Wasser nur teilweise löslich ist.

Die Konzentration der Monoaluminiumphosphatlösung kann zwischen 30 und 60 Gew.-% liegen, beträgt jedoch vorteilhafterweise 45—55, insbesondere 48—52 Gew.-%. Das Gewichtsverhältnis $P_2O_5 : Al_2O_3$ liegt in der zu trocknenden Lösung maximal bei 4 : 1, also bei einem Molverhältnis kleiner 3. Mit besonderem Vorteil werden

Lösungen eingesetzt, in denen das Gewichtsverhältnis bei 3,7—3,9 : 1 liegt. Wird das Molverhältnis gleich 3 (Gewichtsverhältnis 4,2 : 1), so läßt sich das Aufgabegut auf der Walze nicht mehr abtrocknen. Es fällt eine zähe, stark wasserhaltige Masse an, die als Binder völlig ungeeignet ist.

Das wesentliche Kennzeichen der vorliegenden Erfindung besteht darin, daß für den Trokkenprozeß eine Monoaluminiumorthophosphatlösung mit einem Molverhältnis $P_2O_5 : Al_2O_3$ kleiner als 3 eingesetzt wird und Trockentemperaturen oberhalb 150°C, zweckmäßigerweise oberhalb 140°C, vermieden werden. Bei Einhaltung der vorstehenden Verfahrensparameter verläuft die Walzentrocknung ohne Schwierigkeiten, was als überraschend bezeichnet werden muß und aus dem Stand der Technik nicht ohne weiteres abgeleitet werden konnte.

Als Trockenwalzen eignen sich besonders dampfbeheizte Walzen. Da die Monoaluminiumphosphatlösungen stark sauer reagieren (pH-Wert etwa 2), müssen sämtliche, mit dem Aufgabegut in Berührung kommenden Flächen korrosionsfest sein. Verchromte Walzen bieten sich für den angegebenen Zweck an. Die Produktaufgabe mittels Auftragswalzen erfolgt zweckmäßigerweise oszillierend.

Die Nachtrocknung des von der Walze kommenden pulverförmigen Produktes erfolgt insbesondere bei 100—120°C. Selbstverständlich kann auch bei Temperaturen <100°C getrocknet werden, z. B. bei 80°C. Die hier eingesetzten Trokkenvorrichtungen können beliebig sein, z. B. rotierende Trockner, Ofentrockner u. a. Die Nachtrocknung sollte auf eine Restfeuchte von maximal 2 Gew.-% erfolgen. Eine Trocknung bis zur absoluten Wasserfreiheit ist nicht notwendig. Restfeuchten von 1,8—0,5% sind zweckmäßig.

Ein unter den angegebenen Bedingungen hergestelltes Trockenprodukt fällt in kleinen Schuppen an und läßt sich ohne nennenswerten Rückstand auf eine Korngröße von <2 mm absieben. Die Restfeuchte der Schuppen beträgt 1,8 Gew.-%, bestimmt durch Trocknung bei 150°C und 4 Stunden. Die .Schuppen lösen sich nach Eintrag in Wasser (Gewichtsverh. 1 : 1) innerhalb von 12—24 Stunden vollkommen auf, so daß eine rückstandsfreie Lösung vorliegt. Das Trockengut ist nach Absiebung sofort verwendungsfähig. Es kann mit den Bestandteilen der Feuerfestmassen, z. B. $Al_2O_3$ und/oder MgO sofort vermengt und in Säcken verpackt auf den Markt gebracht werden.

Anhand des nachstehenden Beispiels wird der Erfindungsgegenstand noch kurz erläutert:

Beispiel

| | |
|---|---|
| 6,77 kg | Phosphorsäure 75%ig |
| 1,00 kg | $Al_2O_3 = 1,53\ Al(OH)_3$ |
| 2,5 kg | $H_2O$ |

wurden in bekannter Weise zu einer Monoaluminiumphosphatlösung umgesetzt. Die so erhaltene Monoaluminiumphosphatlösung wurde über die Trockenwalze bei einer Temperatur von 135°C abgefahren. Das mit einer Restfeuchte von 4,2%, gemessen bei 150°C und 4 Stunden, anfallende Produkt wurde dann bei 110°C auf eine Restfeuchte von 1,9% getrocknet. Das nachgetrocknete Aluminiumphosphat-Pulver hatte einen $P_2O_5$-Gehalt von 66,2% und einen $Al_2O_3$-Gehalt von 17,8%. Gewichtsverh. = 3,72 : 1. Das Aluminiumphosphatpulver konnte bei Raumtemperatur innerhalb von 6 Stunden in eine trübe Lösung und innerhalb 16 Stunden in eine klare 50%ige wäßrige Lösung übergeführt werden.

**Patentansprüche**

1. Verfahren zur Herstellung von pulverförmigem Monoaluminiumorthophosphat aus einer wäßrigen Monoaluminiumphosphatlösung durch Wasserverdampfung, dadurch gekennzeichnet, daß eine Monoaluminiumorthophosphatlösung mit einem Gewichtsverhältnis $P_2O_5 : Al_2O_3$ von maximal 4 : 1 mit mindestens einer Auftragswalze auf eine Trockenwalze aufgetragen und bei einer Temperatur von maximal 150°C zunächst auf eine Restfeuchte von maximal 7% und minimal 2% getrocknet wird, und daß das gebildete pulverförmige Monoaluminiumorthophosphat anschließend bei einer Temperatur kleiner als 150°C auf einen Wassergehalt von <2% nachgetrocknet wird.

2. Verfahren nach Anspruch 1, dadurch gekennzeichnet, daß die Monoaluminiumorthophosphatlösung bei einer Temperatur von 125° bis 140°C auf Walzen vorgetrocknet wird.

3. Verfahren nach Ansprüchen 1 und 2, dadurch gekennzeichnet, daß eine Monoaluminiumorthophosphatlösung mit einer Konzentration von 30—60 Gew.-%, insbesondere 48—52 Gew.-%, mit einer Auftragswalze auf eine Trockenwalze aufgetragen und getrocknet wird.

4. Verfahren nach den Ansprüchen 1 bis 3, dadurch gekennzeichnet, daß die Monoaluminiumorthophosphatlösung mittels Auftragswalze oszillierend auf die Trockenwalze aufgetragen wird.

5. Verfahren nach den Ansprüchen 1 bis 4, dadurch gekennzeichnet, daß das pulverförmige Monoaluminiumorthophosphat bei einer Temperatur von 100° —120°C nachgetrocknet wird.

6. Verfahren nach den Ansprüchen 1 bis 5, dadurch gekennzeichnet, daß das nachgetrocknete Monoaluminiumorthophosphat auf eine Korngröße <2 mm abgesiebt wird.

**Claims**

1. Process for producing powdered monoaluminium orthophosphate from an aqueous monoaluminium phosphate solution by evaporation of water, characterised in that a monoaluminium orthophosphate solution with a weight ratio of

$P_2O_5 : Al_2O_3$ of not more than 4 : 1 is applied to a dry roller by means of at least one applicator roll and is dried, at a temperature of not more than 150° C, initially to a residual moisture content of not more than 7% and not less than 2%, and the powdered monoaluminium orthophosphate formed is subsequently after-dried to a water content of less than 2% at a temperature below 150° C.

2. Process as claimed in claim 1, characterised in that the monoaluminium orthophosphate solution is pre-dried on rollers at a temperature of 125° to 140° C.

3. Process as claimed in claims 1 and 2, characterised in that a monoaluminium orthophosphate solution is applied to a dry roller with an applicator roll at a concentration of 30—60% by weight, more particularly 48—52% by weight, and dried.

4. Process as claimed in claims 1 to 3, characterised in that the monoaluminium orthophosphate solution is applied to the dry roller in oscillating manner by means of an applicator roll.

5. Process as claimed in claims 1 to 4, characterised in that the powdered monoaluminium orthophosphate is after-dried at a temperature of 100° — 120° C.

6. Process as claimed in claims 1 to 5, characterised in that the after-dried monoaluminium orthophosphate is screened to a particle size of less than 2 mm.

**Revendications**

1. Procédé de fabrication d'orthophosphate de mono-aluminium pulvérulent à partir d'une solution aqueuse de phosphate de mono-aluminium par évaporation de l'eau, caractérisé en ce qu'on applique une solution d'orthophosphate de mono-aluminium ayant un rapport pondéral $P_2O_5 : Al_2O_3$ au maximum de 4 : 1 à l'aide d' au moins un cylindre applicateur sur un cylindre de séchage et l'on sèche à une température atteignant au maximum 150° C, jusqu'à une humidité résiduelle au maximum de 7 et au minimun de 2%, et en ce qu'on sèche ensuite l'orthophosphate de monoaluminium pulvérulent formé à une température inférieure à 150° C jusqu'à une teneur en eau inférieure à 2%.

2. Procédé selon la revendication 1, caractérisé en ce qu'on sèche préalablement la solution d'orthophosphate de mono-aluminium à une température de 125 à 140° C sur des cylindres.

3. Procédé selon les revendications 1 et 2, caractérisé en ce qu'on applique et sèche une solution d'orthophosphate de mono-aluminium ayant une concentration de 30—60% en poids, en particulier de 48—52% en pods, à l'aide d'un cylindre applicateur sur un cylindre de séchage.

4. Procédé selon les revendications 1 à 3, caractérisé en ce qu'on applique de manière oscillante la solution d'orthophosphate de mono-aluminium au moyen d'un cylindre applicateur sur le cylindre de séchage.

5. Procédé selon les revendications 1 à 4, caractérisé en ce qu'on sèche ensuite l'orthophosphate de mono-aluminium pulvérulent à une température de 100 à 120° C.

6. Procédé selon les revendications 1 à 5, caractérisé en ce que l'on sépare par tamisage l'orthophosphate de mono-aluminium post-séché à une dimension de grain inférieure à 2 mm.